# EUROPÄISCHE PATENTSCHRIFT

(11) **EP 0 688 552 B1**
(45) Veröffentlichungstag und Bekanntmachung des Hinweises auf die Patenterteilung: **08.08.2001**
(21) Anmeldenummer: 95107969.8
(22) Anmeldetag: 26.05.1995
(51) Int. Cl.: A61G 5/04, B60G 7/00

(54) **Rollstuhl**
Wheel chair
Fauteuil roulant

(30) Priorität: 15.06.1994 DE 4420877
(43) Veröffentlichungstag der Anmeldung: 27.12.1995
(73) Patentinhaber: Invacare (Deutschland) GmbH, D-32549 Bad Oeynhausen (DE)
(72) Erfinder: Meier, Günter, D-32457 Porta Westfalica (DE)
(74) Vertreter: Hanewinkel, Lorenz, Dipl.-Phys.

(56) Entgegenhaltungen:
- EP-A- 0 369 791
- EP-A- 0 463 168
- DE-A- 3 414 204
- DE-C- 3 921 468
- GB-A- 2 128 558

## Beschreibung

Die Erfindung bezieht sich auf einen Rollstuhl für Behinderte und Kranke gemäß dem Oberbegriff des Anspruches 1.

Ein Kleinfahrzeug in Form eines Rollstuhles mit einer gemäß dem Oberbegriff des Anspruches 1 aufgebauten und am Fahrgestell abgefedert gehaltenen Schwinge für jedes der beiden Hinterräder ist aus der DE-A-34 14 204 bekannt geworden.

Für jedes Hinterrad ist dabei eine eigens ausgeführte Schwinge vorgesehen, so daß in aufwendiger Weise zwei Schwingentypen erforderlich sind.

Aufgabe der Erfindung ist es, eine einfache und kostengünstige sowie beidseitig einsetzbare Abfederung für die beiden Hinterräder eines Rollstuhles zu schaffen.

Diese Aufgabe wird erfindungsgemäß durch die kennzeichnenden Merkmale des Patentanspruches 1 gelöst.

Eine weitere Aufgabe der Erfindung ist es, die Hinterräder jeweils durch einen eine flache Bauweise zeigenden Antriebsmotor anzutreiben, durch den zwischen den Hinterrad-Abfederungen ein großer Freiraum zum Einsatz einer Batterie geschaffen ist.

Diese Aufgabe wird durch die kennzeichnenden Merkmale des Anspruches 4 gelöst.

Die übrigen Ansprüche beinhalten Gestaltungsmerkmale, welche vorteilhafte und förderliche Weiterbildungen der Aufgabenlösungen darstellen.

Bei dem Rollstuhl gemäß der Erfindung wird für die abgefederte Lagerung jedes Hinterrades eine schwenkbar an Fahrgestell-Seitenholmen angreifende Schwinge und ein Stoßdämpfer eingesetzt, wobei an der Schwinge gleichzeitig das Hinterrad und der Antriebsmotor gelagert sind, so daß jedes angetriebene Hinterrad für sich allein abgefedert am Fahrgestell gehalten ist.

Durch diese separate Abfederung der angetriebenen Hinterräder gleichen diese unabhängig voneinander die Fahrbahnunebenheiten aus und bleiben dadurch stets mit der Fahrbahn in Kontakt, was einen gleichmäßigen Antrieb des Rollstuhles bewirkt und eine einwandfreie Lenkmöglichkeit ergibt. Hierdurch erhält die den Rollstuhl benutzende Person ein sicheres Fahrverhalten durch die Abfederung zwischen angetriebenen Rädern und Stuhlgestell eine optimale Sitzeigenschaft.

Die Schwinge ist für den Rechts- und Linkseinsatz identisch ausgebildet, so daß für den Rollstuhl nur ein einfacher und kostengünstiger Schwingentyp erforderlich ist.

Die Schwingen laufen dabei entgegen der Fahrtrichtung schräg nach hinten und unten und ihr Lagerpunkt an dem Fahrgestell ist verhältnismäßig weit nach vorn gelegt. Durch diese beiden Schwingen und den Einsatz des Stoßdämpfers entfallen die bisher üblichen querverlaufenden Kugelgelenkstangen und dadurch ist der Aufnahmeraum für die Batterie von der Rückseite des Rollstuhles gut zugänglich und die Batterie läßt sich verhältnismäßig weit nach vorn in diesen Aufnahmeraum einsetzen, so daß sie im Schwerpunkt des Rollstuhles zur Unterstützung der Fahrsicherheit desselben liegt.

Weiterhin wird dieser gut zugängliche Aufnahmeraum durch die Ausbildung des Antriebes als getriebeloser elektrischer Antriebsmotor in Flachbauweise unterstützt, der nahezu vollständig in die Felge des Hinterrades eingreift und somit zwischen beiden Schwingen nicht platzbeeinträchtigend hervortritt.

Die Schwinge ist in kostengünstiger Weise als einstückiges Aluminiumteil herstellbar und zeigt am vorderen Ende eine abgewinkelte hülsenförmige Lageraufnahme für die Schwenkachse am Fahrgestell und am hinteren Ende mehrere Lageraufnahmen für den wechselweisen Einsatz und das Anbringen des Stoßdämpfers sowie eines Stützrades.

Auf den Zeichnungen ist ein Ausführungsbeispiel der Erfindung dargestellt, welches nachfolgend näher erläutert wird. Es zeigt:

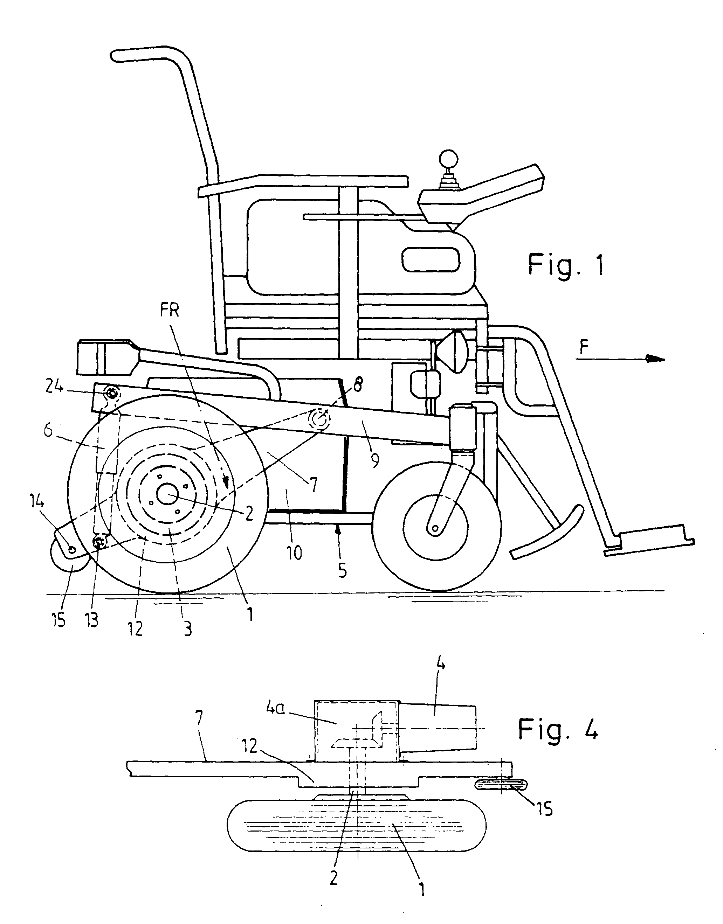

- Fig. 1: eine Seitenansicht eines Rollstuhles mit motorisch angetriebenen und durch je eine Schwinge gegenüber dem Fahrgestell einzeln abgefedert gelagerten Hinterrädern,
- Fig. 2: eine Seitenansicht der am Fahrgestell-Längsholm verschwenkbar gelagerten und durch einen Stoßdämpfer abgefederten sowie das Hinterrad mit Antrieb aufnehmenden Schwinge,

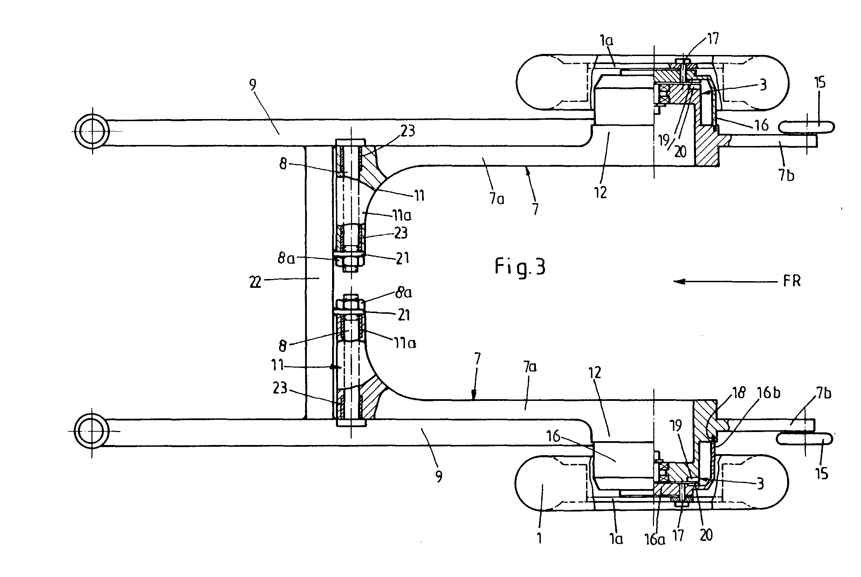

- Fig. 3: eine Draufsicht im teilweisen Schnitt beider Schwingen mit in die Hinterradfelgen eingreifenden Antrieben,
- Fig. 4: eine Draufsicht auf einen Teil der Schwinge mit Antrieb und Winkelgetriebe.

Bei dem Rollstuhl für Behinderte und Kranke sind dessen beiden Hinterräder (1) mit je einem elektromotorischen, auf der Radachse (2) jeder Hinterrades (1) sitzenden Antrieb (3/4) verbunden und jedes Hinterrad (1) ist gegenüber dem Rollstuhl Fahrgestell (5) durch ein zwischen Fahrgestell (5) und Antrieb (3/4) angelenktes Federorgan (6) einzeln abgefedert.

Mit (7) ist eine für den Rechts- und Linkseinsatz identisch ausgebildete Schwinge bezeichnet, welche mit ihrem in Fahrtrichtung (F) vorderen Längenende in einer horizontalen Achse (8) an einem Fahrgestell-Längsholm (9) höhenverschwenkbar lagert, mit ihrem hinteren Längenende durch das von einem Stoßdämpfer oder einer Gasdruckfeder gebildete, am Fahrgestell-Längsholm (9) und an der Schwinge (7) angelenkte Federorgan (6) abgestützt ist; zwischen beiden Schwingen (7) ist ein von der Rollstuhl-Hinterseite bis zu den Schwingen-Schwenkachsen (8) sich erstreckender Freiraum (FR) gebildet, in den eine Batterie (10) günstig im Rollstuhl-Schwerpunkt liegend eingebracht werden kann.

Die Schwinge (7) ist von einem durch Rippen (7c) ausgesteiften, einstückigen, langgestreckten Aluminiumkörper mit von einer topf- oder flanschartigen Antriebsaufnahme (12) aus auf einer Geraden sich gegenüberliegend abgehenden unterschiedlich langen Schwingenarmen (7a, 7b) gebildet, dessen in Fahrtrichtung (F) vorderer, längerer Schwingenarm (7a) eine Lageraufnahme (11) für die Schwenkachse (8) und dessen in Fahrtrichtung ((F) hinterer Schwingenarm (7b) im Endbereich zwei übereinander angeordnete Lageraufnahmen (13) für das wechselweise anbringbare Federorgan (6) aufweist. Die Schwinge (7) kann auch als ausgesteifter, einstückiger Kunststoffkörper ausgebildet sein.

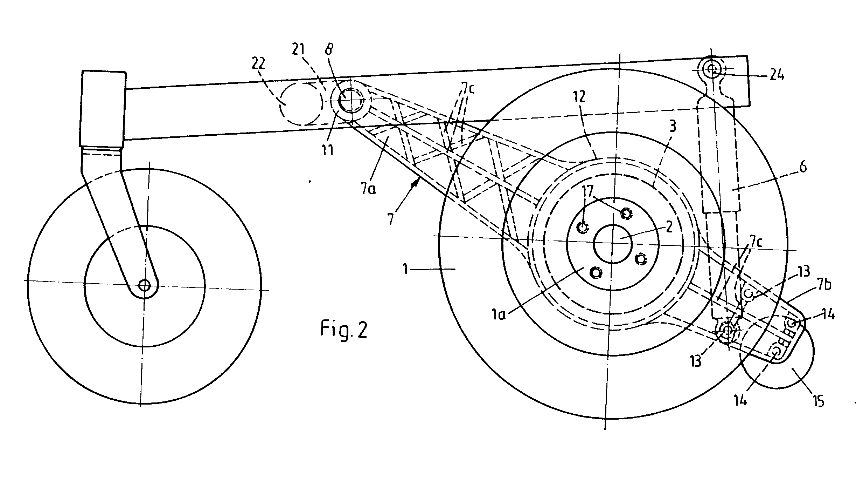

Die Schwinge (7) zeigt im Ende ihres hinteren Schwingenarmes (7b) im Abstand zu den Federorgan-Lageraufnahmen (13) weiterhin zwei übereinander angeordnete Lageraufnahmen (14) für ein wechselweise anbringbares Stützrad (15). Für den Rechts- und Linkseinsatz der Schwinge (7) wird für das Federorgan (6) und das Stützrad (15) jeweils ein der beiden Längsaufnahmen (13, 14) und dabei immer die dann untenliegende Lageraufnahme (13, 14) benutzt (Fig. 2).

An der Antriebsaufnahme (12) der Schwinge (7) ist in bevorzugter Weise ein getriebeloser elektrischer Antriebsmotor (3) angeordnet, der mindestens teilweise, vorzugsweise vollständig, in die Felge (la) des Hinterrades (1) eingreift und mit seinem Motorgehäuse (16) an der Felge (1a) befestigt und gegenüber der Antriebsaufnahme (12) axial drehbar geführt gelagert ist. Das Motorgehäuse (16) ist topfförmig ausgebildet, liegt mit seinem Topfboden (16a) an der Felge (1a) an und ist durch Schrauben (17) bewegungsstarr mit der Felge (1a) verbunden. Das Motorgehäuse (16) greift mit seinem Topfrand (16b) in eine Ringnut (18) der Lageraufnahme (12) ein und wird bei der Drehung darin geführt.

Der getriebelose Motor (3) hat an der Lageraufnahme (12) einen Stator (19) und am Gehäuse (16) einen Rotor (20), jeweils als flache Spulen ausgeführt, welche von der Batterie (10) gespeist werden, durch den Rotor (20) wird das Gehäuse (16) mit Hinterrad (1) gegenüber der Lageraufnahme (12) der Schwinge (7) verdreht und somit angetrieben.

Weiterhin kann an der Antriebsaufnahme (12) der Schwinge (7) ein elektrischer Motor (4) mit Winkelgetriebe (4a) festgelegt sein, welches mit der Hinterrad-Radachse (2) verbunden ist, wie Fig. 4 zeigt.

Die Schwinge (7) verläuft in Fahrtrichtung (F) schräg nach hinten und unten.

Die Schwinge (7) ist an ihrem in Fahrtrichtung (F) vorderen Längenende zu einer abgewinkelten Lageraufnahme (11) mit rechtwinklig zur Schwingen-Längsrichtung stehender Lagerhülse (lla) ausgebildet und durch einen Schraubbolzen (8) mit Mutter (8a) als Schwenkachse (8) an einer Lasche (21) eines beide Fahrgestell-Längsholme (9) verbindenden Querholmes (22) befestigt. In der Hülse (12a) sind um den Schraubbolzen (8) flexible und/oder elastische Schwingungsdämpfer (23), wie Kunststoff- oder Gummihülsen, angeordnet.

Das in Fahrtrichtung (F) hintere Längenende der Schwinge (7) besitzt zwei Hülsen als Lageraufnahmen (13, 14) für den Stoßdämpfer (6) und das Stützrad (15, wobei jeweils in zwei Lageraufnahmen (13, 14) der Stoßdämpfer (6) und das Stützrad (15) an der dem Hinterrad (1) zugewandten Seite des Schwingenarmes (7b) festgelegt sind.

Der Stoßdämpfer (6) ist mit seinem oberen Ende in einer waagerechten Gelenkachse (24) am Fahrgestell-Längsholm (9) gelagert.

## Patentansprüche

1. Rollstuhl für Behinderte und Kranke, mit
- zwei elektromotorisch angetriebenen, mit ihrer Radachse (2) an je einer Schwinge (7) drehbar gelagerten Hinterrädern (1),
- jedes Hinterrad (1) ist gegenüber dem Rollstuhl-Fahrgestell (5) durch einen zwischen Fahrgestell (5) und Antrieb (3) angelenkten Stoßdämpfer (6) einzeln abgefedert,
- jede Schwinge (7) lagert mit ihrem in Fahrtrichtung (F) vorderen Längenende in einer horizontalen Achse (8) an einem Fahrgestell-Längsholm (9),
- die beiden Hinterrad-Schwingen (7) sind für den Links- und Rechtseinsatz identisch ausgebildet, weisen unterschiedlich lange Schwingenarme (7a, 7b) auf und besitzen an ihrem in Fahrtrichtung (F) vorderen, längeren Schwingenarm (7a) eine Lageraufnahme für die Schwenkachse (8) und
- zwischen beiden Schwingen (7) ist ein von der Rollstuhl-Hinterseite bis zu den Schwingen-Schwenkachsen (8) sich erstreckender Freiraum (FR) gebildet,
dadurch gekennzeichnet, daß jede Hinterrad-Schwinge (7) von einem durch Rippen (7c) ausgesteiften, einstückigen Aluminiumkörper mit den beiderseits einer topf- oder flanschartigen Antriebsaufnahme (12) unterschiedlich langen Schwingenarmen (7a, 7b) gebildet ist und der in Fahrtrichtung (F) hintere, kürzere Schwingenarm (7b) im Endbereich zwei übereinander angeordnete Lageraufnahmen (13) für den wechselweise anbringbaren Stoßdämpfer (6) aufweist.

2. Rollstuhl nach Anspruch 1, dadurch gekennzeichnet, daß die beiden Schwingenarme (7a, 7b) mit der Antriebsaufnahme (12) auf einer gemeinsamen geraden Linie liegen.

3. Rollstuhl nach Anspruch 1 oder 2, dadurch gekennzeichnet, daß die Schwinge (7) im Ende ihres hinteren Schwingenarmes (7b) im Abstand zu den Stoßdämpfer-Lageraufnahmen (13) zwei übereinander angeordnete Lageraufnahmen (14) für ein wechselweise anbringbares Stützrad (15) aufweist.

4. Rollstuhl nach einem der Ansprüche 1 bis 3, dadurch gekennzeichnet, daß an der Antriebsaufnahme (12) der Schwinge (12) ein getriebeloser, elektrischer Antriebsmotor (3) angeordnet ist, der mindestens teilweise in die Felge (1a) des Hinterrades (1) eingreift und mit seinem Motorgehäuse (16) an der Felge (la) bewegungsstarr und gegenüber der Antriebsaufnahme (12) axial drehbar geführt gelagert ist.

5. Rollstuhl nach einem der Ansprüche 1 bis 3, dadurch gekennzeichnet, daß an der Antriebsaufnahme (12) der Schwinge (7) ein elektrischer Motor (4) mit Winkelgetriebe (4a) festgelegt ist, welches mit der Hinterrad-Radachse (2) verbunden ist.

6. Rollstuhl nach einem der Ansprüche 1 bis 5, dadurch gekennzeichnet, daß die Schwinge (7) in Fahrtrichtung (F) schräg nach hinten und unten verläuft.

7. Rollstuhl nach einem der Ansprüche 1 bis 6, dadurch gekennzeichnet, daß die Schwinge (7) an ihrem in Fahrtrichtung (F) vorderen Längenende zu einer abgewinkelten Lageraufnahme (11) mit rechtwinklig zur Schwingen-Längsrichtung stehender Lagerhülse (11a) ausgebildet ist und durch einen Schraubbolzen (8) mit Mutter (8a) als Schwenkachse (8) an einer Lasche (21) eines beide Fahrgestell-Längsholme (9) verbindenden Querholmes (22) befestigt ist und dabei in der Hülse (11a) um den Schraubbolzen (8) flexible und/oder elastische Schwingungsdämpfer (23), wie Kunststoff- oder Gummihülsen, angeordnet sind.

8. Rollstuhl nach einem der Ansprüche 1 bis 7, dadurch gekennzeichnet, daß das in Fahrtrichtung (F) hintere Längenende der Schwinge (7) vier Hülsen (13, 14) als Lageraufnahme für den Stoßdämpfer (6) und das Stützrad (15) aufweist und dabei der Stoßdämpfer (6) und das Stützrad (15) an der dem Hinterrad (1) zugewandten Seite des Schwingenarmes (7b) in je einer Hülse (13, 14) festgelegt sind.

9. Rollstuhl nach einem der Ansprüche 1 bis 8, dadurch gekennzeichnet, daß zwischen den beiden Hinterrad-Schwingen (7) ein sich von der Rollstuhl-Hinterseite bis zu den Schwingen-Schwenkachsen (8) hin erstreckender Freiraum (FR) für den Einsatz der Batterie (10) gebildet ist.

## Claims

1. Wheelchair for disabled persons and invalids, having
- two rear wheels (1) which are powered by electric motor and have their wheel axle (2) rotatably mounted on an oscillating crank (7) in each case,
- each rear wheel (1) having individual suspension relative to the wheelchair chassis (5), by virtue of a shock absorber (6) coupled between the chassis (5) and the drive (3),
- each oscillating crank (7) having its longitudinal extremity that is situated at the front in the direction of travel (F) mounted in a horizontal axle (8) on one longitudinal chassis spar (9),
- the two rear wheel oscillating cranks (7) being identically constructed for use on the left and right side, featuring radius arms (7a, 7b) of different lengths and having a mounting locator for the swivel axle (8) on their longer radius arm (7a), which is situated at the front in the direction of travel (F), and
- between the two oscillating cranks (7) a space (FR) extending from the rear of the wheelchair as far as the swivel axles (8) of the oscillating cranks is constituted,
characterised in that each rear wheel oscillating crank (7) is constituted by a one-piece aluminium body stiffened with fins (7c) and having the radius arms (7a, 7b) of different lengths to either side of a pot-like or flange-like drive locator (12), and the end portion of the shorter radius arm (7b), which is at the rear in the direction of travel (F), incorporates two mounting locators (13) arranged one above the other for the shock absorber (6), which is adapted to be reciprocally mounted.

2. Wheelchair according to claim 1, characterised in that the two radius arms (7a, 7b) lie on a common straight line with the drive locator (12).

3. Wheelchair according to claim 1 or 2, characterised in that in the extremity of its rear radius arm (7b), spaced apart from the shock absorber mounting locators (13), the oscillating crank (7) incorporates two mounting locators (14) arranged one above the other for a supporting wheel (15) which is adapted to be reciprocally mounted.

4. Wheelchair according to any of claims 1 to 3, characterised in that arranged on the drive locator (12) of the oscillating arm (7) is a gearless electric drive motor (3) which engages at least partly into the rim (la) of the rear wheel (1) and is mounted in such a way that its motor casing (16) is immovably fixed on the rim (la) and is axially rotatable in relation to the drive locator (12).

5. Wheelchair according to any of claims 1 to 3, characterised in that fixed on the drive locator (12) of the oscillating crank (7) is an electric motor (4) with an angular gear (4a) which is connected to the rear wheel axle (2).

6. Wheelchair according to any of claims 1 to 5, characterised in that the oscillating crank (7) runs diagonally rearwards and downwards in the direction of travel (F).

7. Wheelchair according to any of claims 1 to 6, characterised in that at its longitudinal extremity situated at the front in the direction of travel (F) the oscillating crank (7) is constructed as a bent-angled mounting locator (11) with a bearing sleeve (11a) orientated at right angles to the longitudinal direction of the oscillating crank, and is secured, by a screw bolt (8) with nut (8a) as the swivel axle (8), to a bracket (21) of a transverse spar (22) linking the two longitudinal spars (9) of the chassis, and arranged in the sleeve (11a) around the screw bolt (8) are flexible and/or elastic oscillation absorbers (23), such as plastics or rubber sleeves.

8. Wheelchair according to any of claims 1 to 7, characterised in that the longitudinal extremity of the oscillating crank (7) that is situated at the rear in the direction of travel (F) incorporates four sleeves (13, 14) as a mounting locator for the shock absorber (6) and the supporting wheel (15), and the shock absorber (6) and the supporting wheel (15) are each located in a respective sleeve (13, 14) on the side of the oscillating crank (7b) situated nearest to the rear wheel (1).

9. Wheelchair according to any of claims 1 to 8, characterised in that constituted between the two rear wheel oscillating cranks (7) is a space (FR) extending from the rear of the wheelchair as far as the oscillating crank swivel axles (8), for insertion of the battery (10).

## Revendications

1. Fauteuil roulant pour handicapés et malades comprenant
- deux roues arrière (1) commandées par moteur électrique, montées chacune, en rotation, sur une bielle (7), avec leur essieu (2) respectif,
- chaque roue arrière (1) faisant individuellement ressort par rapport au châssis (5) du fauteuil roulant à l'aide d'un amortisseur de chocs (6) qui est articulé entre le châssis (5) et l'entraînement,
- chaque bielle (7) étant montée, sur un axe horizontal (8), sur un longeron (9) du châsssis, par son extrémité longitudinale avant, vue dans le sens de marche (F),
- les deux bielles (7) des roues arrière, concues identiquement pour l'utilisation à gauche et à droite, présentant des bras de longueur différente (7a, 7b) dont le plus long (7a), situé en avant dans le sens de la marche (F), est pourvu d'un réceptacle servant de coussinet à l'axe de pivotement (8)
et
- un espace libre (Fr) étant formé s'étendant, sur le côté arrière du fauteuil roulant, jusqu'aux axes de pivotement (8) des bielles,
caractérisé en ce que
chaque bielle (7) de roue arrière consiste en un corps d'aluminium qui, formé d'une pièce et renforcé par des nervures (7c), présente deux bras de longueur différente (7a, 7b) disposés de part et d'autre d'un réceptacle en forme de pot ou de bride, accueillant l'entraînement, le bras le plus court (7b), situé en arrière, vu dans le sens de marche (F), présentant, dans la zone d'extrémité, deux paliers (13) superposés accueillant l'amortisseur amovible (6).

2. Fauteuil roulant selon la revendication 1,
caractérisé en ce que
les deux bras (7a, 7b) de bielle et le réceptable de l'entraînement (12) sont disposés sur une ligne droite, commune.

3. Fauteuil roulant selon la revendication 1 ou 2,
caractérisé en ce que
la bielle (7) présente, à l'extrémité de son bras arrière (7b), à distance des paliers des amortisseurs (13), deux paliers superposés (14) pour le montage amovible d'une roue support (15).

4. Fauteuil roulant selon l'une des revendications 1 à 3,
caractérisé en ce
qu'un moteur électrique (3), sans engrenage, attaquant, au moins partiellement, la jante (la) de la roue arrière (1), est monté sur le réceptacle (12) de l'entraînement et, fixé immobilement, par son boîtier (16), sur la jante (la), tourne axialement par rapport au réceptacle (12) de l'entraînement.

5. Fauteuil roulant selon l'une des revendications 1 à 3,
caractérisé en ce
qu'un moteur électrique (4) avec engrenage angulaire (4a) relié à l'essieu (2) de la roue arrière, est fixé au réceptacle (12) de l'entraînement de la bielle (7).

6. Fauteuil roulant selon l'une des revendications 1 à 5,
caractérisé en ce que
la bielle (7) présente une obliquité descendante, en arrière, vue dans le sens de marche (F).

7. Fauteuil roulant selon l'une des revendications 1 à 6,
caractérisé en ce que
la bielle (7) présente, à son extrémité longitudinale avant, vue dans le sens de la marche (F), une douille (11a), formant un palier coudé, disposé à angle droit par rapport aus sens longitudinal de la bielle et est fixée, à l'aide d'un boulon (8) avec écrou (8a), en tant que pivot (8), sur une bride (21) d'une traverse (22) qui relie les deux longerons (9) du châssis, des amortisseurs (23) flexibles et/ou élastiques, tels que manchons en matière plastique ou en caoutchouc, étant disposés dans la douille (11a), autour du boulon (8).

8. Fauteuil roulant selon l'une des revendications 1 à 7,
caractérisé en ce que
l'extrémité longitudinale de la bielle (7), située à l'arrière vue dans le sens de la marche (F), présente quatre douilles (13, 14), qui accueillent l'amortisseurs de chocs (6) et la roue d'appui (15), l'amortisseur de chocs (6) et la roue d'appui (15) étant fixés, chacun, dans une douille (13, 14), sur le côté du bras (7b) de bielle tourné vers la roue arrière (1).

9. Fauteuil roulant selon l'un des revendications 1 à 8,
caractérisé en ce que,
pour la mise en place de la batterie (10), un espace libre (FR), s'étendant de l'arrière du fauteuil roulant jusqu'aux axes de pivotement (8) des bielles, est prévu entre les deux bielles (7) des roues arrière.
